# EUROPÄISCHE PATENTSCHRIFT

(11) **EP 4 150 754 B1**
(45) Veröffentlichungstag und Bekanntmachung des Hinweises auf die Patenterteilung: **29.07.2026**
(21) Anmeldenummer: 21722853.5
(22) Anmeldetag: 30.04.2021
(51) Int. Cl.: H02P 27/08, H02P 23/28, B60L 15/20

(54) **STEUERVORRICHTUNG UND STEUERVERFAHREN FÜR EIN ELEKTRISCHES ANTRIEBSSYSTEM UND ELEKTRISCHES ANTRIEBSSYSTEM**
CONTROL DEVICE AND CONTROL METHOD FOR AN ELECTRIC DRIVE SYSTEM, AND ELECTRIC DRIVE SYSTEM
DISPOSITIF DE COMMANDE ET PROCÉDÉ DE COMMANDE POUR SYSTÈME D'ENTRAÎNEMENT ÉLECTRIQUE, ET SYSTÈME D'ENTRAÎNEMENT ÉLECTRIQUE

(30) Priorität: 12.05.2020 DE 102020205915
(43) Veröffentlichungstag der Anmeldung: 22.03.2023
(73) Patentinhaber: Robert Bosch GmbH, 70442 Stuttgart (DE)
(72) Erfinder: SPRENGER, Helge, 70806 Kornwestheim (DE); ZELTWANGER, Thomas, 74379 Ingersheim (DE)
(86) Internationale Anmeldenummer: PCT/EP2021/061403
(87) Internationale Veröffentlichungsnummer: WO 2021/228582

(56) Entgegenhaltungen:
- JP-A- 2005 130 614
- JP-A- 2008 301 656
- JP-A- 2011 109 883
- JP-A- H0 315 204
- US-A1- 2014 103 843
- US-A1- 2018 076 744

## Beschreibung

Die vorliegende Erfindung betrifft eine Vorrichtung und ein Verfahren zur Steuerung für ein elektrisches Antriebssystem. Ferner betrifft die vorliegende Erfindung ein elektrisches Antriebssystem.

### Stand der Technik

Elektrische Antriebssysteme werden beispielsweise in ganz oder zumindest teilweise elektrisch angetriebenen Fahrzeugen eingesetzt. Dabei wird elektrische Energie von einer sogenannten Traktionsbatterie bereitgestellt und mittels eines elektrischen Stromrichters in eine Wechselspannung konvertiert, die dazu geeignet ist, die elektrische Maschine gemäß den gewünschten Soll-Wert-Vorgaben zu betreiben.

Die Druckschrift DE 10 2017 203 668 A1 beschreibt ein Verfahren und eine Vorrichtung zum Betreiben eines Wechselrichters für ein Antriebssystem. Das hierbei vorgestellte Verfahren umfasst einen Schritt zum Bestimmen einer Schaltfrequenz für den Wechselrichter unter Verwendung eines Arbeitspunktesignals. Das Verfahren weist ferner einen Schritt zum Bereitstellen eines Frequenzsignals auf, um an dem Wechselrichter eine vorgegebene Schaltfrequenz einzustellen. Die Druckschriften US 2014/103843 A1, US 2018/076744 A1 und JP 2008 301656 A offenbaren Steuervorrichtungen und Steuerverfahren für elektrische Antriebssysteme.

Aus JP2005-130614A ist ein Fahrzeug bekannt, bei dem elektromagnetische Geräusche gezielt in einem hörbaren Frequenzbereich erzeugt werden, um akustische Warnsignale bereitzustellen. Die Erzeugung der Geräusche erfolgt durch Steuerung des Stroms und der Frequenz eines Fahrmotors in Abhängigkeit von Fahrzeugzuständen wie Rückwärtsfahrt oder Abbiegevorgängen.

JP2011-109883A beschreibt ein Verfahren zur Erzeugung hörbarer Geräusche bei elektrisch angetriebenen Fahrzeugen durch gezielte Absenkung der Schaltfrequenz eines leistungselektronischen Wandlers, insbesondere zur Warnung von Fußgängern bei niedriger Geschwindigkeit oder bei erkannter Nähe zu Personen.

Aus JPH0315204A ist ferner bekannt, die Schaltfrequenz eines Wechselrichters innerhalb eines asynchronen Betriebsbereichs in einem bestimmten zeitlichen Rhythmus zu variieren, um elektromagnetische Geräusche mit einer gezielt wahrnehmbaren Klangcharakteristik zu erzeugen (z.B. in Anlehnung an musikalische Tonfolgen).

### Offenbarung der Erfindung

Die vorliegende Erfindung schafft eine Steuervorrichtung und ein Verfahren zur Ansteuerung eines elektrischen Antriebssystems sowie ein elektrisches Antriebssystem mit den Merkmalen der unabhängigen Patentansprüche. Weitere vorteilhafte Ausführungsformen sind Gegenstand der abhängigen Patentansprüche.

### Demgemäß ist vorgesehen:

Eine Steuervorrichtung für in elektrisches Antriebssystem, insbesondere ein elektrisches Antriebssystem mit einem Stromrichter und einer elektrischen Maschine. Die Steuervorrichtung umfasst eine Überwachungseinrichtung und eine Steuereinrichtung. Die Überwachungseinrichtung ist dazu ausgelegt, eine Drehfrequenz der elektrischen Maschine zu ermitteln. Zusätzlich oder alternativ kann die Überwachungseinrichtung ein Drehmoment der elektrischen Maschine ermitteln. Ferner ist die Überwachungseinrichtung dazu ausgelegt, eine Variation der ermittelten Drehfrequenz und/oder des ermittelten Drehmoments zu bestimmen. Die Steuereinrichtung ist dazu ausgelegt, einen Regelbereich für eine Schaltfrequenz des Stromrichters festzulegen. Der Regelbereich kann insbesondere unter Verwendung der durch die Überwachungseinrichtung bestimmten Variation der Drehfrequenz oder des Drehmoments festgelegt werden. Ferner ist die Steuereinrichtung dazu ausgelegt, den Stromrichter mit einer Schaltfrequenz in dem festgelegten Regelbereich anzusteuern.

### Weiterhin ist vorgesehen:

Ein elektrisches Antriebssystem mit einer elektrischen Maschine, einem Stromrichter, der dazu ausgelegt ist, die elektrische Maschine anzusteuern, und einer erfindungsgemäßen Steuereinrichtung.

### Schließlich ist vorgesehen:

Ein Verfahren zur Ansteuerung eines elektrischen Antriebssystems, insbesondere eines elektrischen Antriebssystems mit einem Stromrichter und einer elektrischen Maschine. Das Verfahren umfasst einen Schritt zum Ermitteln einer aktuellen Drehfrequenz und/oder eines aktuellen Drehmoments der elektrischen Maschine. Weiterhin umfasst das Verfahren einen Schritt zum Bestimmen einer Variation der ermittelten Drehfrequenz und/oder des ermittelten Drehmoments. Ferner umfasst das Verfahren einen Schritt zum Festlegen eines Regelbereichs für eine Schaltfrequenz des Stromrichters. Insbesondere kann der Regelbereich für die Schaltfrequenz des Stromrichters unter Verwendung der Variation des Drehfrequenz und/oder der Variation des Drehmoments festgelegt werden. Schließlich umfasst das Verfahren einen Schritt zum Ansteuern des Stromrichters mit einer Schaltfrequenz in dem festgelegten Regelbereich.

### Vorteile der Erfindung

Der vorliegenden Erfindung liegt die Erkenntnis zugrunde, dass ein elektrisches Antriebssystem in der Regel einen Stromrichter umfasst, welcher Schaltelemente beinhaltet, die mit einer vorgegebenen Schaltfrequenz angesteuert werden. Diese Schaltfrequenz führt zu einer spezifischen Geräuschentwicklung in dem elektrischen Antriebssystem. Insbesondere bei modernen elektrischen Antriebssystemen kann die Schaltfrequenz für das Ansteuern der Schaltelemente variiert werden. Diese Variation der Schaltfrequenz hat Einfluss auf mehrere Betriebseigenschaften des elektrischen Antriebssystems. Beispielsweise beeinträchtigt die Wahl der Schaltfrequenz die elektrischen Verluste innerhalb des Antriebssystems oder auch einen möglicherweise auftretenden Spannungsrippel am Eingang des Stromrichters. Darüber hinaus hat die Wahl der Schaltfrequenz auch Einfluss auf die akustischen Eigenschaften und die Geräuschemission des elektrischen Antriebssystems. Die auftretende Geräuschemission kann insbesondere von Personen in der Umgebung des Antriebssystems, wie beispielsweise dem Fahrzeugführer eines Elektrofahrzeugs, wahrgenommen werden.

Ein Fahrzeugführer wird dabei in Abhängigkeit von der aktuellen Fahrsituation in der Regel ein für diese Fahrsituation typisches Geräusch erwarten. So wird der Fahrzeugführer beispielsweise bei einem Beschleunigungsvorgang ein Geräusch mit einer ansteigenden oder zumindest gleichbleibenden Frequenz erwarten, während ein Geräusch mit einer sinkenden Frequenz bei einem Beschleunigungsvorgang eher als irritierend empfunden werden könnte. Umgekehrt wird der Fahrzeugführer bei einer Verzögerung des Fahrzeugs eher ein Geräusch mit einer sinkenden oder zumindest gleichbleibenden Frequenz erwarten, während eine Geräuschentwicklung mit ansteigender Frequenz während eines Verzögerungsvorgangs zu Irritationen führen könnte.

Es ist daher eine Idee der vorliegenden Erfindung, dieser Erkenntnis Rechnung zu tragen und die Schaltfrequenz für die Ansteuerung von Schaltelementen in einem Stromrichter für ein elektrisches Antriebssystem in Abhängigkeit von den jeweiligen Betriebseigenschaften in geeigneter Weise anzupassen. Insbesondere soll die Schaltfrequenz für das Ansteuern eines Stromrichters dem Betriebsverhalten des elektrischen Antriebssystems, wie beispielsweise Variationen in der Drehzahl oder dem Drehmoment in geeigneter Weise Rechnung tragen. Auf diese Weise wird eine mit der Schaltfrequenz korrespondierende Geräuschentwicklung des elektrischen Antriebssystems sich ebenfalls entsprechend dem Betriebsverhalten, wie zum Beispiel der Variation der Drehfrequenz bzw. des Drehmoments anpassen. Somit kann eine Geräuschentwicklung des elektrischen Antriebssystems erreicht werden, welche zu einem positiven psycho-akustischen Empfinden führt. So nimmt beispielsweise ein Fahrzeugführer eines Elektrofahrzeugs eine Geräuschentwicklung war, welche zu dem Fahrverhalten des Fahrzeugs korrespondiert. Hierdurch können insbesondere Irritationen des Fahrzeugführers vermieden werden.

Das elektrische Antriebssystem mit einer erfindungsgemäßen Steuervorrichtung kann beispielsweise ein Antriebssystem eines ganz oder zumindest teilweise elektrisch angetriebenen Fahrzeuges sein. Beispielsweise kann ein solches Antriebssystem von einem elektrischen Energiespeicher, wie zum Beispiel einer Traktionsbatterie mit Gleichspannung gespeist werden. In diesem Fall kann der Stromrichter die von dem Energiespeicher bereitgestellte Gleichspannung in eine geeignete ein- oder mehrphasige Wechselspannung konvertieren und diese Wechselspannung an der elektrischen Maschine bereitstellen. Hierbei kann der Stromrichter insbesondere Soll-Wert-Vorgaben, wie zum Beispiel eine einzustellende Drehfrequenz der elektrischen Maschine oder ein bereitzustellendes Drehmoment berücksichtigen. Darüber hinaus kann der Stromrichter selbstverständlich auch beliebige weitere Soll-Wert-Vorgaben berücksichtigen, um an der elektrischen Maschine eine entsprechende geeignete Spannung bereitzustellen.

Der elektrische Stromrichter kann beispielsweise eine oder mehrere Halbbrücken mit jeweils zwei Schaltelementen umfassen, welche entsprechend den Soll-Wert-Vorgaben angesteuert und somit geöffnet bzw. geschlossen werden. Bei den Schaltelementen kann es sich beispielsweise um bipolare Transistoren mit einem isolierten Gateanschluss (IGBT) oder auch MOSFET-Schaltelemente handeln. Insbesondere moderne Transistoren auf Basis von Siliziumkarbid (SiC) können dabei in einem breiten Frequenzbereich für die Schaltfrequenz eingesetzt werden. Hierbei sind Schaltfrequenzen beispielsweise in einem Bereich zwischen 5 und 40 kHz möglich.

Die Steuereinrichtung der erfindungsgemäßen Steuervorrichtung kann somit die Schaltfrequenz für das Ansteuern der Schaltelemente in dem Stromrichter entsprechend den jeweils aktuellen Rahmenbedingungen in geeigneter Weise anpassen. Beispielsweise kann die Steuerfrequenz derart geregelt werden, dass die Verluste in dem elektrischen Antriebssystem minimiert werden, störende Effekte, wie beispielsweise ein Spannungsrippel am Eingang des Spannungswandlers unterhalb eines vorgegebenen Grenzwertes eingehalten werden oder beliebige weitere Rahmenbedingungen eingehalten werden. Hierzu kann dabei ein Regelbereich für die Schaltfrequenz in Abhängigkeit des aktuellen Verlaufs der Motordrehzahl bzw. des Motordrehmoments vorgegeben werden. Auf diese Weise kann die Geräuschentwicklung des elektrischen Antriebssystems beeinflusst werden. Insbesondere können beispielsweise psycho-akustische Beeinträchtigungen, welche zu einer Irritation eines Benutzers führen könnten, vermieden oder zumindest minimiert werden.

Gemäß einer Ausführungsform kann die Überwachungseinrichtung dazu ausgelegt sein, die Variation der Drehfrequenz unter Verwendung eines Gradienten des aktuell erfassten Drehfrequenzverlaufs berechnet werden. Zusätzlich oder alternativ kann auch die Variation des Drehmoments unter Verwendung eines Gradienten des aktuell erfassten Drehmomentverlaufs berechnet werden. Ein Gradient entspricht hierbei in der Regel einer ersten Ableitung der Funktion über die Zeit. Darüber hinaus sind grundsätzlich auch beliebige weitere geeignete Berechnungsverfahren, beispielsweise eine Berechnung einer zweiten Ableitung über der Zeit oder ähnliches möglich.

Gemäß einer Ausführungsform ist die Überwachungseinrichtung dazu ausgelegt, die aktuelle Drehfrequenz auf Basis von Messwerten zu erfassen. Zusätzlich oder alternativ kann auch das Drehmoment auf Basis von Messwerten eines aktuellen Ist-Drehmoments erfasst werden. Zusätzlich oder alternativ zu einer Erfassung der Ist-Werte kann die Überwachung auch Soll-Werte für die Drehfrequenz und/oder das Drehmoment empfangen. Entsprechend kann somit der Regelbereich für die Schaltfrequenz auf Grundlage von aktuellen Ist-Werten und/oder Soll-Wert-Vorgaben vorgegeben werden.

Erfindungsgemäß ist die Steuereinrichtung ferner dazu ausgelegt, eine aktuelle Schaltfrequenz als untere Grenzfrequenz des Regelbereichs für die Schaltfrequenz festzulegen, falls sich die Drehfrequenz und/oder das Drehmoment erhöht. Zusätzlich oder alternativ kann die Steuereinrichtung die aktuelle Schaltfrequenz als obere Grenzfrequenz des Regelbereichs für die Schaltfrequenz festlegen, falls sich die Drehfrequenz und/oder das Drehmoment erniedrigt. Gegebenenfalls kann die untere bzw. obere Grenzfrequenz für den Regelbereich um einen vorgegebenen Schwellwert von der aktuellen Schaltfrequenz abweichen. Beispielsweise kann die untere Frequenz um einen vorgegebenen Schwellwert niedriger sein als die aktuelle Grenzfrequenz, falls sich die Drehfrequenz erhöht. Entsprechend kann als obere Grenzfrequenz eine Frequenz verwendet werden, welche um einen vorgegebenen Schwellwert höher ist als die aktuelle Schaltfrequenz, falls sich die Drehfrequenz erniedrigt. Auf diese Weise kann sichergestellt werden, dass sich die Geräuschentwicklung des elektrischen Antriebssystems, insbesondere die Frequenz der Geräuschentwicklung in Übereinstimmung mit dem dynamischen Verhalten des Antriebssystems verändert.

Erfindungsgemäß ist die Steuereinrichtung weiterhin dazu ausgelegt, eine vorbestimmte maximale Schaltfrequenz als obere Grenzfrequenz des Regelbereichs für die Schaltfrequenz festzulegen, falls sich die Drehfrequenz und/oder das Drehmoment erhöht. Zusätzlich oder alternativ kann eine vorbestimmte minimale Schaltfrequenz als untere Grenzfrequenz des Regelbereichs für die Schaltfrequenz festgelegt werden, falls sich die Drehfrequenz und/oder das Drehmoment erniedrigt. Auf diese Weise kann der Regelbereich für die Schaltfrequenz bei einer Variation der Drehfrequenz in weiten Bereichen ausgeschöpft werden, ohne dass sich hierbei psychoakustische Beeinträchtigungen für einen Benutzer ergeben.

Gemäß einer Ausführungsform ist die Steuereinrichtung dazu ausgelegt, ein Modulationsverfahren für die Ansteuerung des Stromrichters unter Verwendung der ermittelten Drehfrequenz und/oder des ermittelten Drehmoments anzupassen. Als mögliches Modulationsverfahren können neben einer konventionellen Pulsbreitenmodulation (Englisch: Pulse Width Modulation, PWM), insbesondere SVPWM, auch weitere spezielle Modulationsverfahren, wie beispielsweise Blockbetrieb, Flat-Top-Modulation oder ähnliches eingesetzt werden. Hierbei kann für die Wahl des verwendeten Modulationsverfahrens auch die aktuelle Drehfrequenz bzw. das aktuelle Drehmoment sowie die aktuelle Variation von Drehfrequenz bzw. Drehmoment mit berücksichtigt werden. Gemäß einer Ausführungsform umfasst die Steuervorrichtung einen Kennlinienspeicher. Der Kennlinienspeicher kann dazu ausgelegt sein, mindestens eine für die Ansteuerung des Stromrichters geeignete Kennlinie abzuspeichern und bereitzustellen. Die Steuereinrichtung kann insbesondere dazu ausgelegt sein, den Stromrichter unter Verwendung der in dem Kennlinienspeicher abgespeicherten Kennlinie anzusteuern. Die Kennlinien können beliebige geeignete Beziehungen von Betriebsparametern und/oder SollWerten repräsentieren. Beispielsweise können die in dem Kennlinienspeicher abgespeicherten Kennlinien beispielsweise zuvor messtechnisch oder auf Basis von Simulationen ermittelter Zusammenhänge repräsentieren, beispielsweise elektrische Verluste wie zum Beispiel Schaltverluste in den Halbleiter-Schaltelementen, Verluste der elektrischen Maschine, zu erwartende Spannungsrippel, Temperaturverläufe oder ähnliches. Es versteht sich jedoch, dass auch beliebige weitere Beziehungen in den Kennlinienspeichern abgespeichert werden können.

Gemäß einer Ausführungsform ist die Steuereinrichtung dazu ausgelegt, die Ansteuerung des Stromrichters unter Verwendung mindestens eines weiteren Betriebsparameters anzupassen. Bei dem mindestens einen weiteren Betriebsparameter kann es sich beispielsweise um einen messtechnisch oder auf Basis von Simulationen ermittelten Spannungsrippel am Eingang des Stromrichters handeln. Ferner können beispielsweise auch messtechnisch oder mathematisch ermittelte Temperaturen bzw. Temperaturverläufe des Antriebssystems, beispielsweise im Rotor der elektrischen Maschine oder an den Schaltelementen des Stromrichters mit berücksichtigt werden. Darüber hinaus sind selbstverständlich auch beliebige andere Betriebsparameter möglich, welche für die Ansteuerung des Stromrichters mit in Betracht gezogen werden können.

Die obigen Ausgestaltungen und Weiterbildungen lassen sich, soweit sinnvoll, beliebig miteinander kombinieren. Der Schutzbereich der Erfindung wird durch die anhängenden Ansprüche definiert.

### Kurze Beschreibung der Zeichnungen

Die vorliegende Erfindung wird nachfolgend anhand der in schematischen Figuren der Zeichnungen angegebenen Ausführungsbeispiele näher erläutert. Dabei zeigen:
- Figur 1:: eine schematische Darstellung eines Blockschaubilds eines elektrischen Antriebssystems mit einer Steuervorrichtung gemäß einer Ausführungsform;
- Figur 2:: eine schematische Darstellung zur Anpassung des Regelbereichs für die Schaltfrequenz gemäß einer Ausführungsform.; und
- Figur 3:: ein Ablaufdiagramm, wie es einem Verfahren zur Ansteuerung eines elektrischen Antriebssystems gemäß einer Ausführungsform zugrunde liegt.

### Beschreibung der Ausführungsformen

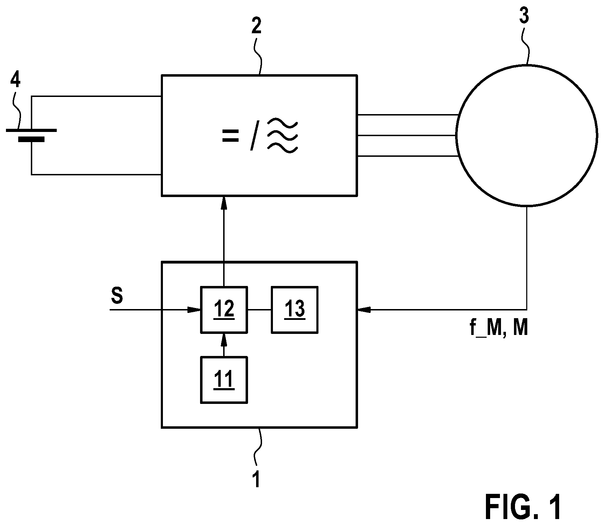

Figur 1 zeigt eine schematische Darstellung eines Blockschaubilds eines elektrischen Antriebssystems gemäß einer Ausführungsform. Das elektrische Antriebssystem umfasst eine elektrische Maschine 3. Die elektrische Maschine 3 kann von einem Stromrichter, insbesondere einem ein- oder mehrphasigen Wechselrichter 2 gespeist werden. Der Stromrichter 2 wird eingangsseitig von einer elektrischen Energiequelle 4, insbesondere von einem elektrischen Energiespeicher, wie beispielsweise der Traktionsbatterie eines Elektrofahrzeugs gespeist. Der Stromrichter 2 konvertiert die von elektrischen Energiequelle 4 bereitgestellte elektrische Energie in eine elektrische Spannung, die dazu geeignet ist, an der elektrischen Maschine 3 einen gewünschten Betriebszustand, beispielsweise eine gewünschte Drehfrequenz oder ein gewünschtes Drehmoment einzustellen. Hierzu kann der Stromrichter 2 mehrere Schaltelemente, insbesondere Halbleiterschaltelemente, wie beispielsweise bipolare Transistoren mit einem isolierten Gateanschluss (IGBT) oder Siliziumkarbid-Transistoren oder ähnliches umfassen. Die Schaltelemente des Stromrichters 2 können mittels geeigneter Steuersignale geöffnet und geschlossen werden. Hierzu können die einzelnen Schaltelemente des Stromrichters 2 mittels entsprechender Steuersignale angesteuert werden. Diese Steuersignale können beispielsweise von der Steuervorrichtung 1 bereitgestellt werden. Insbesondere können die Steuersignale mit einer vorbestimmten Taktfrequenz generiert werden. Insbesondere können die Halbleiterschaltelemente mittels Pulsbreitenmodulation (Englisch: Pulse Width Modulation, PWM) angesteuert werden. Die Vorgaben für das Einstellen eines bestimmten Betriebszustandes wie Drehfrequenz oder Drehmoment können beispielsweise mittels entsprechender Sollwertvorgaben S an der Steuervorrichtung 1 bereitgestellt werden.

Ferner kann die Steuervorrichtung 1 die aktuelle Drehfrequenz f_M der elektrischen Maschine 3 und/oder das aktuell von der elektrischen Maschine 3 bereitgestellte Drehmoment M erfassen. Hierzu können beispielsweise geeignete Sensorvorrichtungen, wie zum Beispiel ein Resolver oder ähnliches vorgesehen sein. Es versteht sich jedoch, dass die aktuelle Drehfrequenz f_M bzw. das Drehmoment M auch auf beliebige andere Weise erfasst werden kann. Beispielsweise sind auch geberlose Verfahren zur Ermittlung der Drehfrequenz f_M möglich.

Die Steuervorrichtung 1 kann eine Überwachungseinrichtung 11 umfassen, welche die Soll-Wert-Vorgaben S sowie gegebenenfalls die Signale der aktuellen Drehfrequenz f_M und/oder des aktuellen Drehmoments M der elektrischen Maschine 3 empfängt. Insbesondere kann die Überwachungseinrichtung 11 den Verlauf der Drehfrequenz f_M bzw. des Drehmoments M der elektrischen Maschine 3 überwachen und Variationen bzw. Veränderungen von Drehfrequenz f_M bzw. Drehmoment M detektieren. Hierzu kann beispielsweise ein Gradient, das heißt eine erste Ableitung über die Zeit oder gegebenenfalls auch eine beliebige andere geeignete Größe, wie zum Beispiel eine zweite Ableitung der Werte über die Zeit oder ähnliches, berechnet werden. Hierzu können beispielsweise die Ist-Werte für Drehfrequenz f_M bzw. Drehmoment M erfasst und für eine vorbestimmte Zeitdauer abgespeichert werden. Beispielsweise können die Werte in einem zyklischen Speicher abgespeichert werden. Beispielsweise kann der zyklische Speicher eine vorbestimmte Anzahl von Messwerten speichern. Nachdem die vorbestimmte Anzahl von Messwerten in dem Speicher eingeschrieben worden ist, überschreibt der nächste nachfolgende Wert den ältesten zuvor gespeicherten Wert. Selbstverständlich sind auch beliebige andere geeignete Verfahren zur Speicherung der Werte bzw. zur Ermittlung einer Variation in der Drehfrequenz f_M bzw. dem Drehmoment M möglich.

Neben der Betrachtung der Ist-Werte für Drehfrequenz f_M bzw. Drehmoment M der elektrischen Maschine 3 können zusätzlich oder alternativ auch Soll-Wert-Vorgaben für Drehfrequenz bzw. Drehmoment betrachtet werden.

Die Überwachungseinrichtung 11 stellt die ermittelten Daten, das heißt die erfassten Werte für Drehfrequenz f_M bzw. Drehmoment M sowie insbesondere die Ergebnisse aus der Analyse bezüglich der Variation von Drehfrequenz f_M bzw. Drehmoment M an der Steuereinrichtung 12 der Steuervorrichtung 1 bereit. Die Steuereinrichtung 12 kann auf Grundlage der von der Überwachungseinrichtung 11 bereitgestellten Daten einen Regelbereich für eine mögliche Schaltfrequenz zur Ansteuerung der Schaltelemente in dem Stromrichter 2 festlegen. Dabei kann die Steuereinrichtung 12 den Regelbereich für die Schaltfrequenz beispielsweise derart einschränken, dass bei einer Erhöhung der Drehfrequenz f_M eine Reduktion der Schaltfrequenz vermieden wird. Analog kann bei einem Absinken der Drehfrequenz f_M an der elektrischen Maschine 3 eine Erhöhung der Schaltfrequenz durch entsprechendes Anpassen des Regelbereichs für die Schaltfrequenz eine Erhöhung vermieden werden. Auf diese Weise kann verhindert werden, dass sich die Frequenzanteile einer Geräuschentwicklung des elektrischen Antriebssystems gegenläufig zu einer Drehzahländerung der elektrischen Maschine verhalten.

Die Steuereinrichtung 12 kann daraufhin unter Berücksichtigung des festgelegten Regelbereichs für die Schaltfrequenz den Spannungswandler 2 und insbesondere die Schaltelemente in dem Spannungswandler 2 in geeigneter Weise ansteuern. Hierzu kann die Steuereinrichtung 12 insbesondere beispielsweise auf mögliche Kennlinien bzw. Kennlinienfelder zurückgreifen, welche in einem Kennlinienspeicher 13 der Steuervorrichtung 1 abgespeichert sind. Diese Kennlinien bzw. Kennlinienfelder können beispielsweise elektrische Verluste in Abhängigkeit der Schaltfrequenz charakterisieren, mögliche bzw. zu erwartenden Spannungsrippel am Eingang des Spannungswandlers 2 in Abhängigkeit von weiteren Betriebsparametern, Temperaturverläufe in Abhängigkeit von weiteren Betriebsparametern, etc.

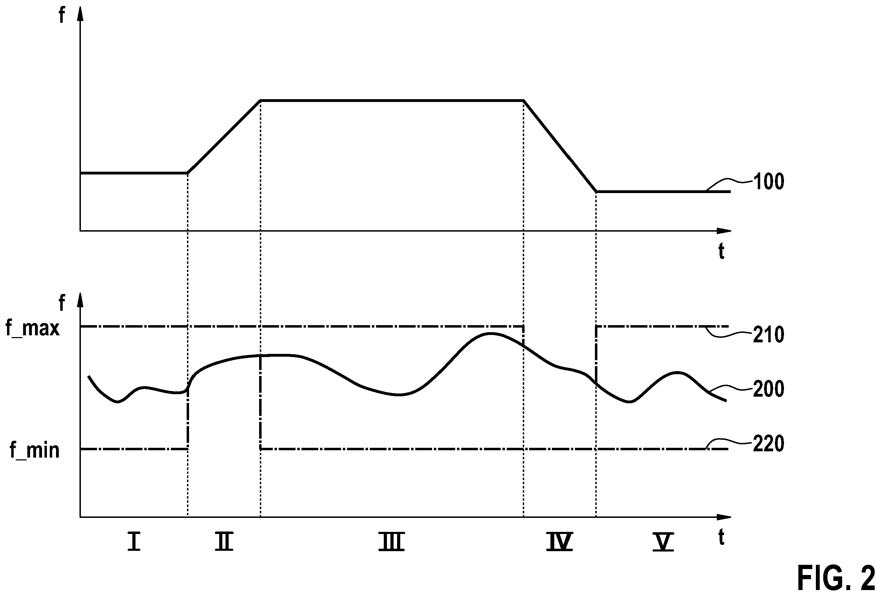

Figur 2 zeigt eine schematische Darstellung zur Anpassung des Regelbereichs für die Schaltfrequenz gemäß einer Ausführungsform. Der Kurvenverlauf 100 stellt dabei die aktuelle Soll- oder Ist-Drehzahl der elektrischen Maschine 3 dar.

Wie hierbei zu erkennen ist, wird die elektrische Maschine 3 in dem ersten Zeitabschnitt I, dem dritten Zeitabschnitt III sowie dem fünften Zeitabschnitt V jeweils mit konstanter oder zumindest annähernd konstanter Drehzahl betrieben. In dem zweiten Zeitabschnitt II wird die Drehzahl f_M der elektrischen Maschine 3 erhöht. In dem vierten Zeitabschnitt IV wird die Drehzahl f_M der elektrischen Maschine 3 verringert.

In dem darunter dargestellten Diagramm ist der Regelbereich der Schaltfrequenz für die Schaltelemente des Spannungswandlers 2 dargestellt. Der Kurvenverlauf 200 stellt dabei die jeweils aktuelle Schaltfrequenz dar. Der obere Linienverlauf 210 illustriert die obere Grenzfrequenz des Regelbereichs für die Schaltfrequenz, und der untere Linienverlauf 220 illustriert die untere Grenzfrequenz des Regelbereichs für die Schaltfrequenz.

In dem ersten Zeitabschnitt I, in dem sich die elektrische Maschine 3 mit annähernd konstanter Drehzahl dreht, kann die Schaltfrequenz beispielsweise vollständig zwischen einer minimalen Schaltfrequenz f_min und einer maximalen Schaltfrequenz f_max variiert werden. Nachdem festgestellt wird, dass sich die Drehzahl f_M der elektrischen Maschine 3 erhöht bzw. erhöhen soll, wird dieser Regelbereich in Zeitabschnitt II eingeschränkt. Beispielsweise kann die untere Grenze des Regelbereichs für die Schaltfrequenz auf die jeweils aktuelle Schaltfrequenz limitiert werden. Somit steht als Regelbereich für die Schaltfrequenz nur noch ein Bereich zwischen der aktuellen Schaltfrequenz und der maximal zulässigen Schaltfrequenz f_max zur Verfügung. Auf diese Weise kann vermieden werden, dass bei einer Erhöhung der Drehfrequenz f_M der elektrischen Maschine 3 die Schaltfrequenz erniedrigt wird und es somit zu einer Geräuschentwicklung kommt, die dem Verhalten der elektrischen Maschine 3 akustisch entgegenstehen würde.

Nachdem in Abschnitt III festgestellt wurde, dass die Drehfrequenz f_M der elektrischen Maschine 3 wieder konstant oder zumindest annähernd konstant ist, kann der Regelbereich für die Schaltfrequenz erweitert werden. Beispielsweise kann in dieser Phase wieder die Schaltfrequenz vollständig zwischen der minimalen Schaltfrequenz f_min und der maximalen Schaltfrequenz f_max variiert werden.

Wird in Zeitabschnitt IV daraufhin detektiert, dass sich die Drehfrequenz f_M der elektrischen Maschine 3 erniedrigt, so kann daraufhin auch der Regelbereich für die Schaltfrequenz entsprechend eingeschränkt werden. Beispielsweise kann in diesem Fall als maximal zulässige Schaltfrequenz die jeweils aktuelle Schaltfrequenz festgesetzt werden. Somit kann sich die Schaltfrequenz während dem Absinken der Drehfrequenz f_M nur zwischen der aktuellen Schaltfrequenz und der minimal zulässigen Schaltfrequenz f_min bewegen. Nachdem daraufhin in Abschnitt V wieder festgestellt wird, dass die Drehfrequenz f_M der elektrischen Maschine 3 wieder konstant oder zumindest annähernd konstant ist, kann der Regelbereich wieder auf den vollständigen Regelbereich zwischen der minimalen Schaltfrequenz f_min und der maximalen Schaltfrequenz f_max erweitert werden.

Neben den zuvor beschriebenen Einschränkungen der Schaltfrequenz unter Berücksichtigung der Drehfrequenz bzw. des Drehmoments der elektrischen Maschine 3 können darüber hinaus zusätzlich auch noch beliebige weitere Betriebsparameter berücksichtigt werden. Insbesondere können auch diese weiteren Betriebsparameter beispielsweise weitere Einschränkungen für den Regelbereich der Schaltfrequenzen vorgeben. Beispielsweise kann für das Begrenzen eines Spannungsrippels am Eingang des Spannungswandlers 2 ebenfalls eine geeignete Einschränkung der Schaltfrequenz für den Spannungswandler 2 erforderlich sein. Darüber hinaus korrespondiert die Wahl der Schaltfrequenz auch mit Schaltverlusten in den Schaltelementen des Spannungswandlers 2 sowie weiteren Verlusten in der elektrischen Maschine 3. Auch dies kann gegebenenfalls zu weiteren Einschränkungen für den Regelbereich der Schaltfrequenz führen. Auch mögliche Temperatureffekte, wie beispielsweise eine Erwärmung des Rotors der elektrischen Maschine 3 können gegebenenfalls weitere Einschränkungen für den Regelbereich der Schaltfrequenz erforderlich machen. Selbstverständlich können auch beliebige weitere Betriebsparameter berücksichtigt werden, um den Regelbereich für die Schaltfrequenz entsprechend anzupassen.

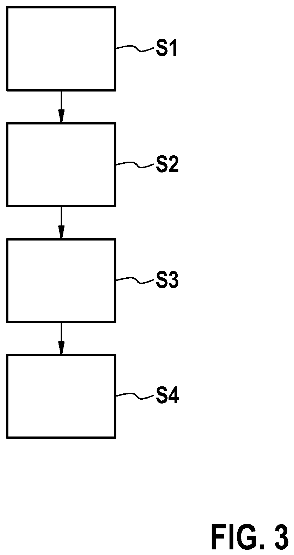

Figur 3 zeigt eine schematische Darstellung eines Ablaufdiagramms, wie es einem Verfahren zur Ansteuerung eines elektrischen Antriebssystems gemäß einer Ausführungsform zugrunde liegt. Das Verfahren kann grundsätzlich beliebige Schritte umfassen, wie sie bereits zuvor im Zusammenhang mit dem elektrischen Antriebssystem beschrieben worden sind. Entsprechend kann auch das elektrische Antriebssystem beliebige Komponenten aufweisen, wie sie im Zusammenhang mit dem Verfahren zur Ansteuerung im Nachfolgenden beschrieben werden.

In Schritt S1 kann zunächst eine aktuelle Drehfrequenz und/oder ein aktuelles Drehmoment einer elektrischen Maschine ermittelt werden. In Schritt S2 kann daraufhin eine Variation der ermittelten Drehfrequenz und/oder des ermittelten Drehmoment bestimmt werden. Hierauf kann in Schritt S3 ein Regelbereich für eine Schaltfrequenz eines Stromrichters festgelegt werden. Insbesondere kann der Regelbereich für die Schaltfrequenz unter Verwendung der Variation der Drehfrequenz und/oder der Variation des Drehmoments festgelegt werden. Auf Grundlage dieses Regelbereichs kann in Schritt S4 eine Ansteuerung des Stromrichters erfolgen, wobei die Schaltfrequenz innerhalb des zuvor festgelegten Regelbereichs eingestellt werden kann.

Zusammenfassend betrifft die vorliegende Erfindung die Ansteuerung eines elektrischen Antriebssystems, wobei ein Regelbereich für die Schaltfrequenz eines Stromrichters in einem solchen Antriebssystem unter Berücksichtigung des Verlaufs der Drehfrequenz bzw. des Drehmoments der elektrischen Maschine angepasst werden kann. Auf diese Weise können psycho-akustische Irritationen vermieden werden.

## Patentansprüche

1. Steuervorrichtung (1) für ein elektrisches Antriebssystem mit einem Stromrichter (2) und einer elektrischen Maschine (3), wobei die Steuervorrichtung (1) umfasst:
eine Überwachungseinrichtung (11), die dazu ausgelegt ist, ein Drehfrequenz und/oder ein Drehmoment der elektrischen Maschine (3) zu ermitteln, und eine Variation der ermittelten Drehfrequenz und/oder des ermittelten Drehmoments zu bestimmen; und
eine Steuereinrichtung (12), die dazu ausgelegt ist, einen Regelbereich für eine Schaltfrequenz des Stromrichters (2) unter Verwendung der Variation der Drehfrequenz und/oder der Variation des Drehmoments festzulegen und den Stromrichter (2) mit einer Schaltfrequenz in dem festgelegten Regelbereich anzusteuern,
wobei die Steuereinrichtung (12) dazu ausgelegt ist, eine aktuelle Schaltfrequenz als untere Grenzfrequenz des Regelbereichs für die Schaltfrequenz festzulegen, falls sich die Drehfrequenz und/oder das Drehmoment erhöht, und/oder die aktuelle Schaltfrequenz als obere Grenzfrequenz des Regelbereichs für die Schaltfrequenz festzulegen, falls sich die Drehfrequenz und/oder das Drehmoment erniedrigt, und/oder
wobei die Steuereinrichtung (12) dazu ausgelegt ist, eine vorbestimmte maximale Schaltfrequenz als obere Grenzfrequenz des Regelbereichs für die Schaltfrequenz festzulegen, falls sich die Drehfrequenz und/oder das Drehmoment erhöht, und/oder eine vorbestimmte minimale Schaltfrequenz als untere Grenzfrequenz des Regelbereichs für die Schaltfrequenz festzulegen, falls sich die Drehfrequenz und/oder das Drehmoment erniedrigt.

2. Steuervorrichtung (1) nach Anspruch 1, wobei die Überwachungseinrichtung (11) dazu ausgelegt ist, die Variation der Drehfrequenz und/oder des Drehmoments unter Verwendung eines Gradienten der Drehfrequenz und/oder des Drehmoments zu berechnen.

3. Steuervorrichtung (1) nach Anspruch 1 oder 2, wobei die Überwachungseinrichtung (11) dazu ausgelegt ist eine aktuellen Ist-Drehfrequenz und/oder ein aktuelles Ist-Drehmoment zu erfassen, und/oder eine Soll-Drehfrequenz und/oder ein Soll-Drehmoments empfangen.

4. Steuervorrichtung (1) nach einem der Ansprüche 1 bis 3, wobei die Steuereinrichtung (12) dazu ausgelegt ist, ein Modulationsverfahren für die Ansteuerung des Stromrichters (2) unter Verwendung der ermittelten Drehfrequenz und/oder des ermittelten Drehmoments anzupassen.

5. Steuervorrichtung (1) nach einem der Ansprüche 1 bis 4, mit einem Kennlinienspeicher (13), der dazu ausgelegt ist, mindestens eine Kennlinie für die Ansteuerung des Stromrichters (2) abzuspeichern und bereitzustellen,
wobei die Steuereinrichtung (12) dazu ausgelegt ist, den Stromrichter (2) unter Verwendung der in dem Kennlinienspeicher abgespeicherten Kennlinie anzusteuern.

6. Steuervorrichtung (1) nach einem der Ansprüche 1 bis 5, wobei die Steuereinrichtung (12) dazu ausgelegt ist, die Ansteuerung des Stromrichters (2) unter Verwendung mindestens eines weiteren Betriebsparameters anzupassen.

7. Elektrisches Antriebssystem, mit:
einer elektrischen Maschine (3);
einem Stromrichter (2), der dazu ausgelegt ist, die elektrische Maschine (3) anzusteuern; und
einer Steuereinrichtung (1) nach einem der Ansprüche 1 bis 6.

8. Verfahren zur Ansteuerung eines elektrischen Antriebssystems mit einem Stromrichter (2) und einer elektrischen Maschine (3), mit den Schritten:
Ermitteln (S1) einer aktuellen Drehfrequenz und/oder eines aktuellen Drehmoments der elektrischen Maschine (3);
Bestimmen (S2) einer Variation der ermittelten Drehfrequenz und/oder des ermittelten Drehmoments;
Festlegen (S3) eines Regelbereichs für eine Schaltfrequenz des Stromrichters (2) unter Verwendung der Variation der Drehfrequenz und/oder der Variation des Drehmoments; und
Ansteuern (S4) des Stromrichters (2) mit einer Schaltfrequenz in dem festgelegten Regelbereich,
wobei eine aktuelle Schaltfrequenz als untere Grenzfrequenz des Regelbereichs für die Schaltfrequenz festgelegt wird, falls sich die Drehfrequenz und/oder das Drehmoment erhöht, und/oder die aktuelle Schaltfrequenz als obere Grenzfrequenz des Regelbereichs für die Schaltfrequenz festgelegt wird, falls sich die Drehfrequenz und/oder das Drehmoment erniedrigt, und/oder
wobei eine vorbestimmte maximale Schaltfrequenz als obere Grenzfrequenz des Regelbereichs für die Schaltfrequenz festgelegt wird, falls sich die Drehfrequenz und/oder das Drehmoment erhöht, und/oder eine vorbestimmte minimale Schaltfrequenz als untere Grenzfrequenz des Regelbereichs für die Schaltfrequenz festgelegt wird, falls sich die Drehfrequenz und/oder das Drehmoment erniedrigt.

## Claims

1. Control apparatus (1) for an electric drive system comprising a converter (2) and an electric machine (3), wherein the control apparatus (1) comprises:
a monitoring device (11), which is designed to ascertain a rotational frequency and/or a torque of the electric machine (3), and to determine a variation in the ascertained rotational frequency and/or the ascertained torque; and
a control device (12), which is designed to define a control range for a switching frequency of the converter (2) using the variation in the rotational frequency and/or the variation in the torque and to drive the converter (2) with a switching frequency in the defined control range,
wherein the control device (12) is designed to define a current switching frequency as the lower limit frequency of the control range for the switching frequency if the rotational frequency and/or the torque increases, and/or to define the current switching frequency as the upper limit frequency of the control range for the switching frequency if the rotational frequency and/or the torque decreases, and/or
wherein the control device (12) is designed to define a predetermined maximum switching frequency as the upper limit frequency of the control range for the switching frequency if the rotational frequency and/or the torque increases, and/or to define a predetermined minimum switching frequency as the lower limit frequency of the control range for the switching frequency if the rotational frequency and/or the torque decreases.

2. Control apparatus (1) according to Claim 1, wherein the monitoring device (11) is designed to calculate the variation in the rotational frequency and/or the torque using a gradient of the rotational frequency and/or the torque.

3. Control apparatus (1) according to Claim 1 or 2, wherein the monitoring device (11) is designed to detect a current actual rotational frequency and/or a current actual torque, and/or to receive a target rotational frequency and/or a target torque.

4. Control apparatus (1) according to any of Claims 1 to 3, wherein the control device (12) is designed to adapt a modulation method for driving the converter (2) using the ascertained rotational frequency and/or the ascertained torque.

5. Control apparatus (1) according to any of Claims 1 to 4, having a characteristic curve memory (13), which is designed to store and provide at least one characteristic curve for driving the converter (2),
wherein the control device (12) is designed to drive the converter (2) using the characteristic curve stored in the characteristic curve memory.

6. Control apparatus (1) according to any of Claims 1 to 5, wherein the control device (12) is designed to adapt the driving of the converter (2) using at least one further operating parameter.

7. Electric drive system, comprising:
an electric machine (3);
a converter (2), which is designed to drive the electric machine (3); and
a control device (1) according to one of Claims 1 to 6.

8. Method for driving an electric drive system comprising a converter (2) and an electric machine (3), comprising the steps of:
ascertaining (S1) a current rotational frequency and/or a current torque of the electric machine (3);
determining (S2) a variation in the ascertained rotational frequency and/or the ascertained torque;
defining (S3) a control range for a switching frequency of the converter (2) using the variation in the rotational frequency and/or the variation in the torque; and
driving (S4) the converter (2) with a switching frequency in the defined control range,
wherein a current switching frequency is defined as the lower limit frequency of the control range for the switching frequency if the rotational frequency and/or the torque increases, and/or the current switching frequency is defined as the upper limit frequency of the control range for the switching frequency if the rotational frequency and/or the torque decreases, and/or
wherein a predetermined maximum switching frequency is defined as the upper limit frequency of the control range for the switching frequency if the rotational frequency and/or the torque increases, and/or a predetermined minimum switching frequency is defined as the lower limit frequency of the control range for the switching frequency if the rotational frequency and/or the torque decreases.

## Revendications

1. Arrangement de commande (1) pour un système d'entraînement électrique comprenant un convertisseur statique (2) et une machine électrique (3), l'arrangement de commande (1) comprenant :
une installation de surveillance (11), qui est configurée pour déterminer une fréquence de rotation et/ou un couple de la machine électrique (3), et pour déterminer une variation de la fréquence de rotation déterminée et/ou du couple déterminé ; et
une installation de commande (12), qui est configurée pour définir une plage de régulation pour une fréquence de commutation du convertisseur statique (2) en utilisant la variation de la fréquence de rotation et/ou la variation du couple, et pour commander le convertisseur statique (2) avec une fréquence de commutation dans la plage de régulation définie,
dans lequel l'installation de commande (12) est configurée pour définir une fréquence de commutation actuelle comme fréquence limite inférieure de la plage de régulation pour la fréquence de commutation si la fréquence de rotation et/ou le couple augmente, et/ou pour définir la fréquence de commutation actuelle comme fréquence limite supérieure de la plage de régulation pour la fréquence de commutation si la fréquence de rotation et/ou le couple diminue, et/ou
dans lequel l'installation de commande (12) est configurée pour définir une fréquence de commutation maximale prédéterminée comme fréquence limite supérieure de la plage de régulation pour la fréquence de commutation si la fréquence de rotation et/ou le couple augmente, et/ou pour définir une fréquence de commutation minimale prédéterminée comme fréquence limite inférieure de la plage de régulation pour la fréquence de commutation si la fréquence de rotation et/ou le couple diminue.

2. Arrangement de commande (1) selon la revendication 1, dans lequel l'installation de surveillance (11) est configurée pour calculer la variation de la fréquence de rotation et/ou du couple en utilisant un gradient de la fréquence de rotation et/ou du couple.

3. Arrangement de commande (1) selon la revendication 1 ou 2, dans lequel l'installation de surveillance (11) est configurée pour détecter une fréquence de rotation réelle actuelle et/ou un couple réel actuel, et/ou pour recevoir une fréquence de rotation de consigne et/ou un couple de consigne.

4. Arrangement de commande (1) selon l'une des revendications 1 à 3, le dispositif de commande (12) étant conçu pour adapter un procédé de modulation pour la commande du convertisseur statique (2) en utilisant la fréquence de rotation déterminée et/ou le couple déterminé.

5. Arrangement de commande (1) selon l'une des revendications 1 à 4, comprenant une mémoire de courbes caractéristiques (13), qui est configurée pour mémoriser et mettre à disposition au moins une courbe caractéristique pour la commande du convertisseur statique (2),
dans lequel l'installation de commande (12) est configurée pour commander le convertisseur statique (2) en utilisant la courbe caractéristique mémorisée dans la mémoire de courbes caractéristiques.

6. Arrangement de commande (1) selon l'une des revendications 1 à 5, dans lequel l'installation de commande (12) est configurée pour adapter la commande du convertisseur statique (2) en utilisant au moins un autre paramètre de fonctionnement.

7. Système d'entraînement électrique, comprenant :
une machine électrique (3) ;
un convertisseur statique (2), qui est conçu pour commander la machine électrique (3) ; et
un arrangement de commande (1) selon l'une des revendications 1 à 6.

8. Procédé de commande d'un système d'entraînement électrique comprenant un convertisseur statique (2) et une machine électrique (3), comprenant les étapes suivantes :
la détermination (S1) d'une fréquence de rotation actuelle et/ou d'un couple actuel de la machine électrique (3) ;
la détermination (S2) d'une variation de la fréquence de rotation déterminée et/ou du couple déterminé ;
la définition (S3) d'une plage de régulation pour une fréquence de commutation du convertisseur statique (2) en utilisant la variation de la fréquence de rotation et/ou la variation du couple ; et
la commande (S4) du convertisseur statique (2) avec une fréquence de commutation dans la plage de régulation définie,
dans lequel une fréquence de commutation actuelle est définie comme fréquence limite inférieure de la plage de régulation pour la fréquence de commutation si la fréquence de rotation et/ou le couple augmente, et/ou la fréquence de commutation actuelle est définie comme fréquence limite supérieure de la plage de régulation pour la fréquence de commutation si la fréquence de rotation et/ou le couple diminue, et/ou
dans lequel une fréquence de commutation maximale prédéterminée est définie comme fréquence limite supérieure de la plage de régulation pour la fréquence de commutation si la fréquence de rotation et/ou le couple augmente, et/ou une fréquence de commutation minimale prédéterminée est définie comme fréquence limite inférieure de la plage de régulation pour la fréquence de commutation si la fréquence de rotation et/ou le couple diminue.
